# EUROPÄISCHE PATENTANMELDUNG

(11) **EP 0 973 021 A1**
(43) Veröffentlichungstag der Anmeldung: **19.01.2000**
(21) Anmeldenummer: 98810689.4
(22) Anmeldetag: 17.07.1998
(51) Int. Cl.: G01M 3/28, G01M 3/02, F02C 7/22, F02C 7/232

(54) **Verfahren zum Prüfen der Dichtigkeit von Brennstoffleitungen**

(71) Anmelder: Asea Brown Boveri AG, 5401 Baden (CH)
(72) Erfinder: Küenzi, Thomas, 4127 Birsfelden (CH); Meier, Frank, 8052 Zürich (CH)
(74) Vertreter: Klein, Ernest

(57) **Zusammenfassung**

Die Brennstoffleitungen 10, 11 eines in einem Wärmeerzeuger 40 eingebauten Mehrstoffbrenners sind mit einer Leitung 12 verbunden, durch die ein nicht brennbares flüssiges Medium in die Brennstoffleitungen eingebracht werden kann. Beispielsweise kann die Verbindung über die absperrbaren Prüfleitungen 31, 32 hergestellt werden. Bei Betrieb des Wärmeerzeugers 40 mit dem Brennstoff, der über die Leitung 10 zugeführt wird, kann die Leitung 11 durch Öffnen des Absperrorgans 33 mit dem unter Druck befindlichen, nicht brennbaren flüssigen Medium beaufschlagt werden. Analog kann auch die Leitung 10 mit dem Prüfmedium beaufschlagt werden, während Brennstoff über die Leitung 11 herangeführt wird. Es ist somit möglich, die Brennstoffleitungen 10, 11 gefahrlos auf Dichtigkeit zu überprüfen, ohne den Betrieb der Anlage unterbrechen zu müssen.

## Beschreibung

### Technisches Gebiet

Die vorliegende Erfindung betrifft ein Verfahren zum Prüfen der Dichtigkeit von Brennstoffleitungen von in Wärmeerzeugern eingebauten Mehrbrennstoff-Brennern mit getrennten Zuleitungen für jeden eingesetzten Brennstoff, wobei in bestimmten Betriebszuständen mindestens eine Brennstoffleitung nicht benutzt wird, während der Wärmeerzeuger betrieben wird.

### Stand der Technik

Die hohen Investitionskosten moderner feuerungstechnischer Anlagen fordern zu deren wirtschaftlichem Betrieb eine hohe Verfügbarkeit und den Einsatz des jeweils wirtschaftlichsten Brennstoffes. Die Brennstoffauswahl wird weiterhin durch die Forderung nach einem geringen Schadstoffausstoss und durch betriebstechnische Gründe massgeblich beeinflusst. Beim Einsatz von Gasturbinen zur Stromerzeugung wird daher in hohem Ausmasse auf in Pipelines herangeführtes Erdgas zurückgegriffen.

Gerade in aufstrebenden Schwellenländern mit einer nicht ausreichend stabilen Infrastruktur besteht aber ein nicht zu unterschätzendes Risiko, dass eine hinreichende Gasversorgung nicht immer gewährleistet werden kann, der Ausfall eines in Grundlast betriebenen Kraftwerksblockes jedoch zu erheblichen Problemen in der Stromversorgung einer Region führt. Da nun andererseits Gas sehr schlecht zu speichern ist, werden solche Kraftwerke, aber auch andere feuerungstechnische Anlagen, gerne als sogenannte *Dual Fuel* Anlagen ausgeführt. Für einige Tage kann dann leicht zu speicherndes Öl als *Backup Fuel* eingesetzt werden.

Eine solche Bauweise bedingt selbstverständlich mehrere Brennstoff-Versorgungsleitungen, die aus Gründen der einfachen Montage und Wartung im allgemeinen mit lösbaren Verbindungen ausgerüstet sind. Diese bergen das permanente Risiko von Brennstoffleckagen.

Die unkontrollierbaren Gefahren einer unbemerkten Brennstoffleckage sind nun ohne weiteres nachzuvollziehen: Neben den wirtschaftlichen Auswirkungen eines Anlagenausfalls sind auch Menschenleben akut gefährdet. Dies sei nochmals am Beispiel einer Kraftwerks-Gasturbine in der oben erwähnten Dual-Fual Bauweise geschildert. Aus wirtschaftlichen Gründen werden diese meist nur einen Bruchteil ihrer Betriebszeit mit dem Zweitbrennstoff, in diesem Falle Öl, betrieben. Während der anderen Zeit sind die Verbindungen der Ölzuleitungen ohne Belastung durch den Brennstoffdruck thermischem Stress und den Schwingungen der Maschine ausgesetzt, was selbstverständlich ein Lösen der Schraubverbindungen fördert. Dadurch wird einerseits das quantitative Risiko einer Ölleckage gross. Auf der anderen Seite ist eine Leckage des Flüssigbrennstoffs ungleich kritischer als eine Gasleckage: Letztere kann durch Gasschnüffler frühzeitig erkannt werden. Weiterhin bedarf Gas zu seiner Entzündung eines recht eng definierten Konzentrationsbereichs und einer Initialzündung. Öl hingegen kann sich auf der heissen Oberfläche einer Gasturbinen-Brennkammer spontan entzünden. Auf jeden Fall aber bedingen Reinigungsarbeiten nach einer Ölleckage einen mehrtägigen Anlagenstillstand.

Eine Übertragung des oben dargestellten Szenarios auf eine Vielzahl feuerungstechnischer Anwendungen ist trivial. Wünschenswert ist daher, im Interesse der Betriebssicherheit und der Verfügbarkeit feuerungstechnischer Anlagen die Möglichkeit zu schaffen, während des Betriebs einer solchen Anlage die Dichtheit der Brennstoffleitungen zu prüfen, denn aus wirtschaftlichen Gründen ist es kaum möglich, beispielsweise die oben erwähnte in Grundlast mit Erdgas betriebene Gasturbine regelmässig zur Leckageprüfung der Ölzuleitungen stillzulegen.

Ein Verfahren zur Leckageprüfung von Brennstoffleitungen während des Betriebs eines Wärmeerzeugers ist Gegenstand der vorliegenden Erfindung.

### Darstellung der Erfindung

Aufgabe der Erfindung ist, eine Möglichkeit zu schaffen, die Dichtheit von Brennstoffleitungen während des Betriebes des Brenners oder der Brenner zu prüfen. Eine Randbedingung der Erfindung ist, den apparativen Aufwand gering zu halten, um es der Antragstellerin zu ermöglichen, auch vorhandene Anlagen schnell und unproblematisch nachzurüsten. Zusätzlich muss das Verfahren einfach sein, um ohne wesentliche Betriebseinschränkungen durch das Bedienungspersonal einer Anlage ausgeführt werden zu können.

Die Aufgabe wird erfindungsgemäss dadurch gelöst, dass bei einem Mehrstoffbrenner Zuleitungen für gerade nicht benutzte Brennstoffe geprüft werden, während der Brenner mit anderen Brennstoffen betrieben wird. Die Prüfung wird mit einer nicht brennbaren Flüssigkeit durchgeführt, die unter Druck in die Leitung eingebracht wird.

Dies ermöglicht, die Dichthheitsprüfung gefahrlos während des Betriebs der Anlage, und damit ohne Beeinträchtigung des Betriebs und damit verbundener negativer wirtschaftlicher Folgen in regelmässigen Intervallen, durchzuführen. Eine eventuelle Leckage kann durch Inaugenscheinnahme der Fügestellen der Brennstoffleitung am Austritt des Hilfsmediums erkannt werden. Bei entsprechender Ausführung kann eine Leckage qualitativ auch durch Messung des Druckabfalls im System automatisch erkannt werden, wie unten beschrieben.

In einer bevorzugten Ausführungsform des Verfahrens wird Wasser als Hilfsmedium zur Dichtheitsprüfung eingesetzt. Gerade bei einer regelmässigen Routineprüfung zeigt sich Wasser als billig, umweltfreundlich und leicht zu handhaben.

In dieser Ausführungsvariante kann ein möglicherweise vorhandenes System, das Wasser beispielsweise zur Stickoxidreduktion oder zur Leistungserhöhung einer Gasturbine in den Wärmeerzeuger eindüst, herangezogen werden, um das zur Dichtheitsprüfung benötigte Medium unter Druck bereitzustellen. Ebenso kann unter Druck stehendes Wasser an geeigneter Stelle aus einem von der Feuerung beheizten Wasser-Dampf Kreislauf benutzt werden, beispielsweise durch eine Anzapfung der Kesselspeisepumpe.

Eine apparativ besonders einfache Ausführung des erfindungsgemässen Verfahrens ergibt sich, wenn die Feuerung mit dem von der Antragstellerin eingesetzten emissionsarmen Mehrbrennersystem für flüssige und gasförmige Brennstoffe ausgestattet ist. Diese sind ohnehin mit einer Wasserzuführung zur Stickoxidreduzierung im Betrieb mit Flüssigbrennstoff ausgestattet. Dabei sind die Zuführungen von Flüssigbrennstoff und Wasser in der Brennerlanze verbunden, in der Weise, dass ein Rückschlagventil den Eintritt von Brennstoff in die Wasserzuführung verhindert. Wird nun im Gasbetrieb bei hoher Last Wasser in die Brennkammer eingedüst, so wird sich über diese Verbindung in der Leitung für den Flüssigbrennstoff Druck aufbauen bis zum nächsten stromauf liegenden geschlossenen Absperrorgan. Eine Dichtheitsprüfung des komplexen Brennstoffsystems kann dann durch Inaugenscheinnahme der Fügestellen vorgenommen werden. Eine automatische Detektion über den Druckabfall, wie unten beschrieben, kann nicht vorgenommen werden, da das System in diesem Fall zum Brennraum hin offen ist.

Ist die oben beschriebene Verbindung zwischen einer Wassereindüsung und der Brennstoffzufuhr nicht gegeben, so kann das Wasser auch über eine externe Prüfleitung in das Brennstoff-Versorgungssystem eingebracht werden.

Werden in einem Mehrbrennersystem die Brenner durch Einzelschaltventile angesteuert, und ist die externe Prüfleitung stromauf derselben angebracht, so kann die Brennstoffleitung bis zu den Einzelschaltventilen automatisiert überprüft werden, indem bei geschlossenen Einzelschaltventilen Hilfsmedium bis zum erwarteten Betriebsdruck der Brennstoffleitungen in dieselben gepresst und danach die Zufuhr des Hilfsmediums geschlossen wird. Der Druckabfall in der Brennstoffleitung darf dabei einen anlagenspezifisch vorzugebenden Wert nicht überschreiten; ansonsten liegt eine Leckage vor, deren Ort durch Sichtprüfung zu bestimmen ist. Die Messung und Auswertung des Druckabfalls kann dabei automatisiert erfolgen.

Weiterhin besteht auch die Möglichkeit, speziell für die Dichtheitsprüfung Absperrorgane direkt am Eintritt der Brennstoffleitung in den oder in die Brenner einzubringen. Werden die Absperrorgane geschlossen, so kann ebenfalls Hilfsmedium unter Druck in die Brennstoffleitung eingebracht, und der Druckabfall gemessen und ausgewertet werden.

Schliesslich besteht im Falle der beiden letztgenannten Verfahrensvarianten die Möglichkeit, bei automatisierter Auswertung des Tests und negativem Ergebnis der Dichtheitsprüfung direkt die Brennstoffzufuhr in die betroffene Leitung über ein Schnellschlussventil oder einen Trip der Brennstoffpumpe zu blockieren.

Nachfolgend ist anhand der Zeichnung für unterschiedliche Brennstoffsysteme je ein Ausführungsbeispiel der Erfindung näher erläutert. In der Zeichnung sind jeweils nur die für das Verständnis der Erfindung unmittelbar notwendigen Komponenten dargestellt. Teilweise ist im Sinne einer besseren Übersichtlichkeit der Zeichnung nur eine Brennstoffleitung dargestellt, da der notwendige Anschluss einer zweiten Brennstoffleitung für den Fachmann ohne weiteres nachvollziehbar ist.

Ebenso ist in allen Figuren eine Wassereinspritzung in den Brenner dargestellt. Wo dies nicht explizit erwähnt ist, ist diese für die Ausführung der Erfindung nicht zwingend erforderlich.

### Kurze Beschreibung der Zeichnung

Fig. 1 zeigt eine Vorrichtung, mit der das erfindungsgemässe Verfahren an einer Gasturbine mit Zweibrennstoff-Einzelbrenner durchgeführt werden kann.
Anhand Fig. 2 wird eine Möglichkeit beschrieben, ein erfindungsgemässes Verfahren ohne apparative Veränderungen an einem real ausgeführten Mehrbrennersystem zu realisieren.
In Fig. 3 ist schematisch eine Vorrichtung dargestellt, das die automatisierte Durchführung der erfindungsgemässen Dichtheitsprüfung ermöglicht.

### Wege zur Ausführung der Erfindung

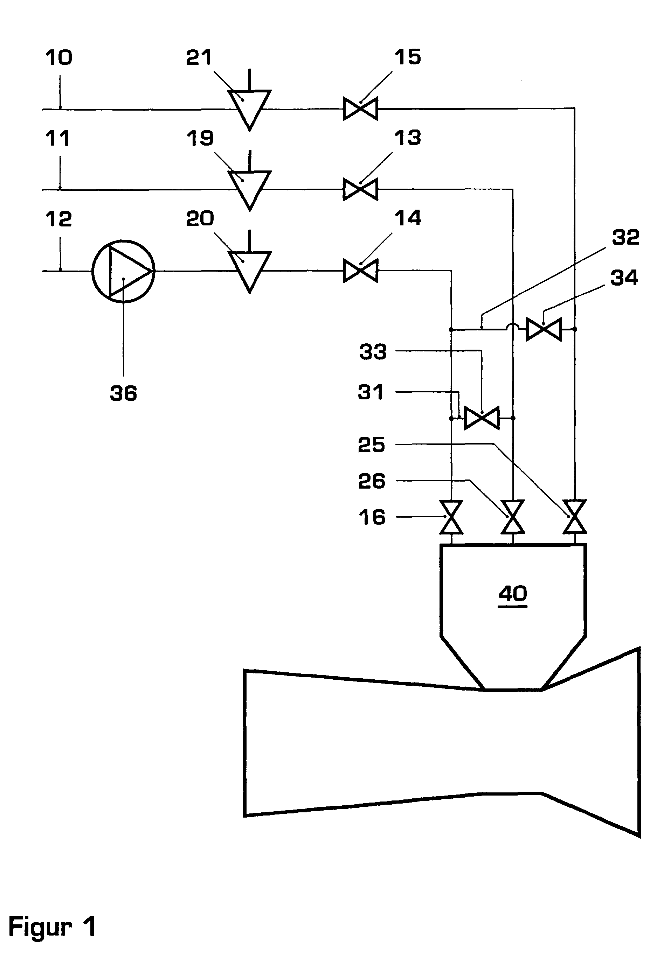

Fig. 1 zeigt beispielhaft eine bevorzugte Ausführungsvariante der Erfindung an einer mit Einzelbrenner ausgestatteten Gasturbine. Der in der Brennkammer 40 eingebaute Einzelbrenner ist im Ausführungsbeispiel an die Brennstoffleitungen 10 und 11, sowie die Wasserzuleitung 12 angeschlossen. Die Zuleitungen sind mit Schnellschlussventilen 19, 20 und 21 ausgestattet. Die Regelventile 13, 15 und 16 regeln die Wasser- bzw. Brennstoffmengen, das Ventil 14 den Druck in der Wasserleitung 12, welche über die absperrbaren Prüfleitungen 31,32 mit den Brennstoffleitungen 10, 11 verbunden ist. Wird nun mit dem über die Leitung 10 zugeführten Brennstoff gefeuert, muss das Absperrorgan 34 geschlossen und das Absperrorgan 25 geöffnet sein. Es ist nun möglich, während des Betriebes der Gasturbine die Brennstoffleitung 11 auf Dichtheit zu prüfen. Dazu werden das Schnellschlussventil 19 und das Absperrorgan 26 geschlossen. Über das Druckregelventil 14 wird in der Leitung 12 der in der Brennstoffleitung 11 zu erwartende Betriebsdruck eingestellt. Durch Öffnen der Absperrorgans 33 wird die Brennstoffleitung 11 im Bereich zwischen Schnellschlussventil 19 und Absperrorgan 26 mit Wasser gefüllt, das unter eben diesem Druck steht. Die Brennstoffleitung 11 kann nun durch Inaugenscheinnahme auf eventuelle Leckagen geprüft werden, oder es kann nach Schliessen des Absperrorgans 33 der Druckabfall in der Brennstoffleitung 11 gemessen werden. Überschreitet dieser einen systemspezifischen Grenzwert, deutet dies auf eine Leckage hin, worauf die Brennstoffleitung 11 auf die Stelle des Wasseraustritts inspiziert werden kann. Weiterhin wird bis zur Behebung des Fehlers das Schnellschlussventil 19 in geschlossener Stellung blockiert. Die Dichtheitsprüfung der Leitung 10 erfolgt analog, und ist für den Fachmann leicht nachzuvollziehen.

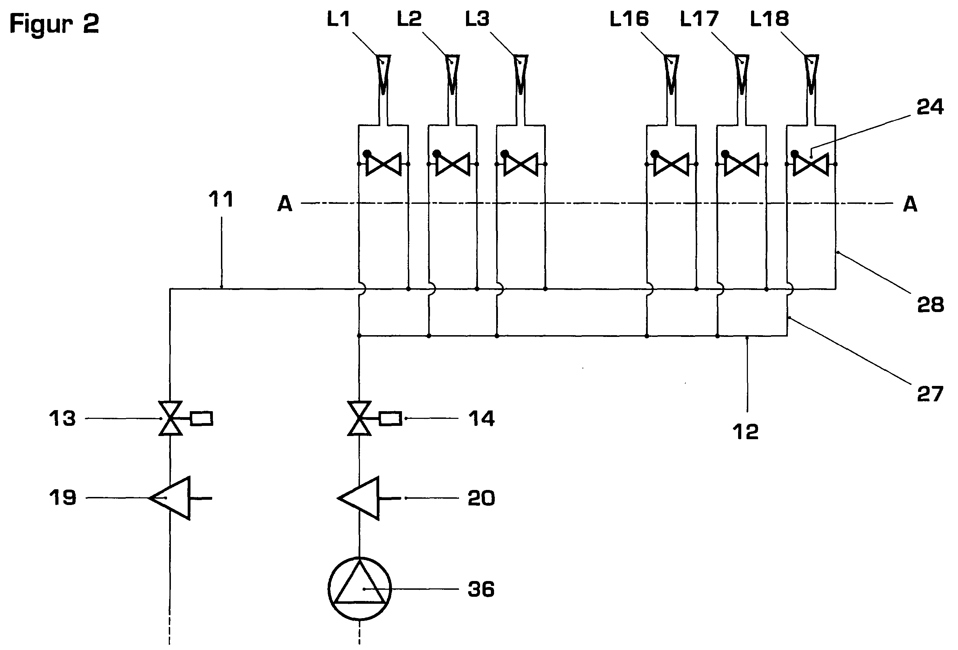

Ein apparativ besonders einfaches Beispiel für die Ausführung der Erfindung ist in Fig. 2 dargestellt. Die zu prüfende Brennstoffleitung 11 und die Wasserleitung 12 sind über Stichleitungen 27 und 28 mit in diesem Beispiel 18 Einzelbrennern L1 bis L18 verbunden. Je nach spezifischer Auslegung des Systems können an den Abzweigungen der Stichleitungen 27,28 von den Sammelleitungen 11 und 12 auch Einzelschaltventile angeordnet sein, die bei der unten beschriebenen Dichtheitsprüfung geöffnet sein müssen. Der Anschluss der Brenner an die Wasserversorgung ist in diesem Fall zwingend, die zweite Brennstoffleitung aus Gründen der Übersichtlichkeit nicht eingezeichnet. Die mit A-A gekennzeichnete Linie stellt schematisch die Trennung zwischen Brenner und Zuleitung dar. Innerhalb der Brenner oder in einem Brennersystem sind die zu prüfende Brennstoffleitung und die Wasserleitung durch Rückschlagventile 24 verbunden. Dies ist bei den von der Antragstellerin verwendeten Vormischbrennern am für Flüssigbrennstoff verwendeten Leitungskanal der Fall, dergestallt, dass kein Brennstoff in die Wasserzufuhr gelangen kann. Während der Durchführung der Dichtheitsprüfung werden die Brenner mit einem über die nicht eingezeichnete Brennstoffleitung zugeführten Brennstoff, beispielsweise Erdgas, vorzugsweise auf hoher Last betrieben. Das Schnellschlussventil 19 ist in diesem Fall geschlossen. Zur Dichtheitsprüfung wird das Schnellschlussventil 20 geöffnet. Die Wasserpumpe 36 liefert Wasser unter hohem Druck.Über das Regelventil 14 wird nun die eingespritzte Wassermenge so lange gesteigert, bis der Druck in der Wasserleitung 12 dem in der Brennstoffleitung 11 zu erwartenden Betriebsdruck entspricht. Dieses Wasser strömt unter dem selben Druck in über die Rückschlagventile 24 in die Brennstoffleitung 11 ein. Die Dichtheit der Fügestellen in der Brennstoffleitung 11 und den Stichleitungen 28 kann durch eine Inspektion derselben verifiziert werden.

Auffallend an dieser Ausführung ist der geringe erforderliche apparative Aufwand. Das erfindungsgemässe Verfahren kann an bestehenden Anlagen der Anmelderin ohne Umbauten des Leitungssystems ausgeführt werden. Jedoch ist eine Auswertung des Druckabfalls im Leitungssystem nicht möglich, da das System zum Brennraum hin offen ist.

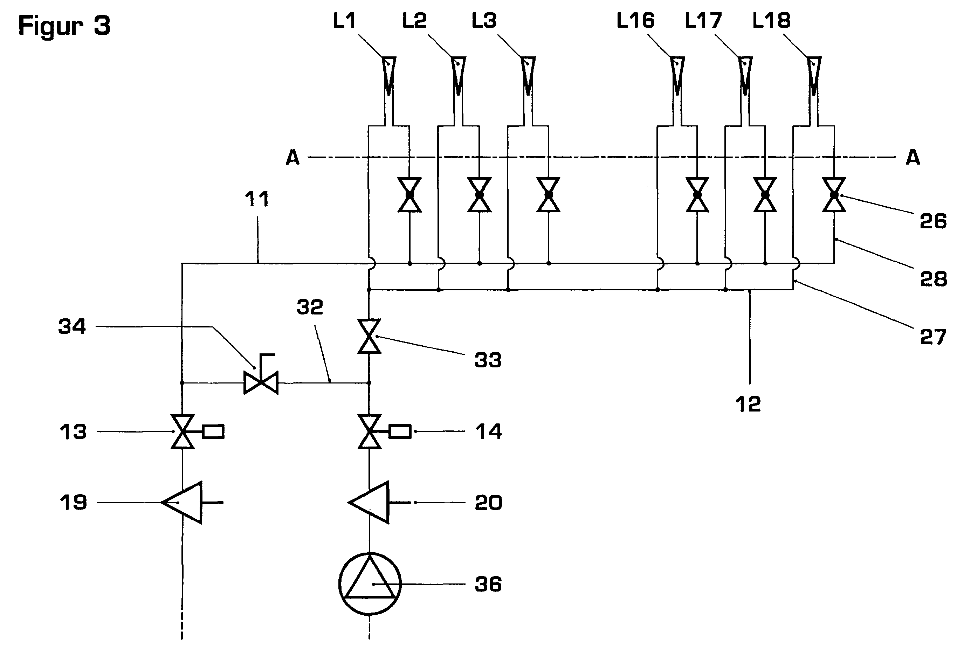

In Fig. 3 ist eine Abwandlung des in Fig. 2 dargestellten Ausführungsbeispiels dargestellt. Neu sind die unmittelbar an den Brennern montierten oder in die Brenner integrierten Absperrorgane 26, die Prüfleitung 32, sowie die Absperrorgane 33 und 34. In Abwandlung des oben beschriebenen Verfahrens werden zur Dichtheitsprüfung während des Betriebs mit einem Brennstoff, der über eine nicht dargestellte Brennstoffleitung zugeführt wird, die Absperrorgane 26 und 33 geschlossen. Das Wasser füllt über die Prüfleitung 32 und das offene Absperrorgan 34 die Brennstoffleitung 11 und die Stichleitungen 28 mit Wasser bei einem Druck, der dem maximalen Betriebsdruck der Brennstoffleitung 11 entspricht. Nach Schliessen des Absperrorgans 34 kann wiederum der Druckabfall in den Leitungen ausgewertet werden.

### Bezugszeichenliste

- 10: Brennstoffleitung
- 11: Brennstoffleitung
- 12: Zuleitung für nicht brennbares inkompressibles Medium
- 13: Regelventil
- 14: Regelventil
- 15: Regelventil
- 16: Regelventil
- 19: Schnellschlussventil
- 20: Schnellschlussventil
- 21: Schnellschlussventil
- 24: Rückschlagventil
- 25: Absperrorgan
- 26: Absperrorgan
- 27: Wasserleitung
- 28: Brennstoffleitung
- 31: Prüfleitung
- 32: Prüfleitung
- 33: Absperrorgan
- 34: Absperrorgan
- 36: Pumpe für nicht brennbares inkompressibles Medium
- 40: Brennraum
- L1 ... L18: Brenner
- A-A: Trennung zwischen Brennstoffzuleitungen und Brennern oder Brennersystem

## Patentansprüche

1. Verfahren zum Prüfen der Dichtigkeit von Brennstoffleitungen von in Wärmeerzeugern eingebauten Mehrbrennstoff-Brennern mit getrennten Zuleitungen für jeden eingesetzten Brennstoff, wobei in bestimmten Betriebszuständen mindestens eine Brennstoffleitung nicht benutzt wird, während der Wärmeerzeuger betrieben wird, dadurch gekennzeichnet, dass mindestens eine in diesem Betriebszustand nicht benutzte Brennstoffleitung mittels einer nicht brennbaren unter Druck stehenden Flüssigkeit abgedrückt wird.

2. Verfahren nach Anspruch 1, dadurch gekennzeichnet, dass die Prüfung auch während des Betriebs des Brenners in anlagenspezifisch festzulegenden Intervallen regelmässig durchgeführt wird.

3. Verfahren nach einem der Ansprüche 1 oder 2, dadurch gekennzeichnet, dass als Hilfsmedium zum Prüfen der Dichtheit Wasser verwendet wird.

4. Verfahren nach Anspruch 3, wobei der Brenner an ein Wasserversorgungssystem angeschlossen ist, über das Wasser in den Brenner eingedüst wird, dadurch gekennzeichnet, dass eben dieses Wasserversorgungssystem auch verwendet wird, um das Wasser für die Dichtheitsprüfung bereitzustellen.

5. Verfahren nach Anspruch 3, dadurch gekennzeichnet, dass das für die Dichtheitsprüfung benötigte Wasser unter Druck an geeigneter Stelle aus einem Wasser-Dampf Kreislauf entnommen wird.

6. Verfahren nach Anspruch 4, wobei ein Wärmeerzeuger mit einem Mehrbrennersystem ausgestattet ist, in dem die Wasserzuführung und die Brennstoffzuführung unmittelbar im Brennersystem miteinander verbunden sind, dergestalt, dass eine Rückschlagklappe (24) das Eindringen von Brennstoff in das Wasserversorgungssystem verhindert, dadurch gekennzeichnet, dass das Prüfmedium über eben diese Verbindung in die Brennstoffleitung (11) eingeführt wird.

7. Verfahren nach einem der Ansprüche 1 bis 5, dadurch gekennzeichnet, dass das Prüfmedium über eine Prüfleitung (32) in die Brennstoffleitung eingebracht wird.

8. Verfahren nach Anspruch 7, wobei die Brennstoffverteilung in einem Mehrbrennersystem durch Einzelschaltventile vorgenommen wird, dadurch gekennzeichnet, dass die Leckageprüfung der Brennstoffleitung bis zu den Einzelschaltventilen automatisiert erfolgt.

9. Verfahren nach Anspruch 7, dadurch gekennzeichnet, dass sich unmittelbar am Brenner ein Absperrorgan (25,26) in der Brennstoffleitung befindet, so dass die Leckageprüfung in der gesamten Brennstoffleitung automatisiert erfolgen kann.

10. Verfahren nach einem der Ansprüche 8 und 9, dadurch gekennzeichnet, dass im Falle einer Leckage unmittelbar eine Wirkung auf die Brennstoffzufuhr zur betroffenen Leitung erfolgt.
